(19) Europäisches Patentamt
European Patent Office
Office européen des brevets

(11) **EP 1 901 857 B1**

(12) **EUROPÄISCHE PATENTSCHRIFT**

(45) Veröffentlichungstag und Bekanntmachung des Hinweises auf die Patenterteilung:
**02.11.2011 Patentblatt 2011/44**

(21) Anmeldenummer: **06762076.5**

(22) Anmeldetag: **19.06.2006**

(51) Int Cl.:
***B06B 1/06*** *(2006.01)*

(86) Internationale Anmeldenummer:
**PCT/EP2006/005845**

(87) Internationale Veröffentlichungsnummer:
**WO 2007/006396 (18.01.2007 Gazette 2007/03)**

(54) **UNTERWASSERANTENNE MIT EINER AUS EINER MEHRZAHL VON ELEKTROAKUSTISCHEN WANDLERN BESTEHENDEN WANDLERANORDNUNG**

UNDERWATER ANTENNA COMPRISING A TRANSDUCER ARRAY COMPOSED OF A PLURALITY OF ELECTROACOUSTIC TRANSDUCERS

ANTENNE SUBAQUATIQUE COMPRENANT UN SYSTEME CONVERTISSEUR QUI CONSISTE EN UNE PLURALITE DE CONVERTISSEURS ELECTROACOUSTIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.07.2005 DE 102005032212**

(43) Veröffentlichungstag der Anmeldung:
**26.03.2008 Patentblatt 2008/13**

(73) Patentinhaber: **ATLAS Elektronik GmbH**
**28309 Bremen (DE)**

(72) Erfinder: **THEUERKAUF, Nils**
**26122 Oldenburg (DE)**

(74) Vertreter: **Wasiljeff, Johannes M.B.**
**Jabbusch Siekmann & Wasiljeff**
**Patentanwälte**
**Otto-Lilienthal-Strasse 25**
**28199 Bremen (DE)**

(56) Entgegenhaltungen:
**DE-A1- 10 052 636     US-A- 5 550 792**

**Beschreibung**

Die Erfindung betrifft eine Unterwasserantenne der im Oberbegriff des Anspruchs 1 definierten Gattung.

Ein bekanntes Composite-Schallwandler-Feld (US 5 950 291, Fig. 2) weist einen Composite-Körper auf, in welchem Stäbe oder Elemente aus piezoelektrischem oder elektrostriktivem Keramikmaterial, z.B. PZT, in weichem Polymer, z.B. Polyurethan mit winzigen hohlen Polymer-Kugeln, eingebettet sind. Auf der unteren und oberen Außenfläche des Composite-Körpers sind dünne Elektroden aufgetragen, die die Stirnenden der Keramikelemente kontaktieren.

Ein bekannter Ultraschallwandler (DE 100 52 636 A1) weist einen Composite- oder Verbundkörper aus Kunststoff mit einer Vielzahl von im Kunststoff eingebetteten, zwischen der Ober- und Unterseite des Verbundkörpers sich erstreckenden Keramikelementen aus piezoelektrischer oder elektrostriktiver Keramik auf. Die Ober- und Unterseite des Verbundkörpers ist mit jeweils einer Elektrode beschichtet, die die Keramikelemente stirnseitig kontaktiert. Die Keramikelemente sind als kunststoffummantelte Keramikstäbchen ausgebildet, die unmittelbar aneinanderstoßend matrixartig aneinandergereiht sind. Der zwischen den ummantelten Keramikstäbchen verbleibende Freiraum ist durch einen Kunststoff, z.B. Harz oder Polyurethan, ausgefüllt. Die Elektroden auf der Außenfläche des Verbundkörpers kontaktieren alle oder ausgewählte Gruppen von Keramikstäbchen, wodurch ein elektroakustischer Wandler oder eine Anordnung von elektroakustischen Wandlern, ein sog. Array, entsteht. Ein solches Array weist eine große Frequenzbandbreite und eine hohe Sendeleistung und Empfangsempfindlichkeit auf.

Bei einer bekannten, linearen Ultraschall-Antenne mit einer Vielzahl von mit Spaltabstand aneinandergereihten, quaderförmigen Wandlerelementen aus piezoelektrischem Material (US 4 460 841) werden Nebenpegel oder Nebenzipfel, sog. side lobes, in der Richtcharakteristik der Antenne durch mechanische Amplitudenstaffelung, auch mechanisches Shading genannt, reduziert, indem die nebeneinander angeordneten, quaderförmigen, piezoelektrischen Wandlerelemente mit Quaderlängen ausgeführt sind, die von dem in Antennenmitte liegenden Wandlerelement zu den an den beiden Antennenenden liegenden Wandlerelementen abnehmen. Beispielsweise ist die Reduzierung der Quaderlängen so vorgenommen, dass die Außenkontur der Antenne Ellipsenform aufweist. Die einzelnen Wandlerelemente sind aus einer mit Elektrodenflächen belegten piezoelektrischen Keramikplatte geschnitten.

Weiterhin ist eine Unterwasserantenne mit mindestens aus einer Mehrzahl von elektroakustischen Wandlern bestehender Wandleranordnung, welche Sektoren bilden bekannt (US 5550792).

Der Erfindung liegt die Aufgabe zugrunde, eine Unterwasserantenne mit einer großen Frequenzbandbreite in fertigungstechnisch einfacher Weise zu schaffen, die zeitgleich in verschiedenen Richtungen weisende Sende- und/ oder Empfangsrichtungen bei weitgehender Dämpfung der Nebenpegel oder -zipfel in den Sende- und/oder Empfangscharakteristiken aufweist.

Die Aufgabe ist erfindungsgemäß durch die Merkmale im Anspruch 1 gelöst.

Die erfindungsgemäße Unterwasserantenne hat den Vorteil, dass durch die angegebene Ausbildung der streifenförmigen Elektroden in den einzelnen Sektoren der Composite-Platte in sehr einfacher Weise eine akustische Leistungsabgabe der einzelnen Wandleranordnungen erreicht wird, die von der Mitte jeder Wandleranordnung zu deren Rand hin abfällt, was zu einer wesentlichen Reduzierung der Nebenpegel der Sende- und Empfangscharakteristik, auch Richtcharakteristik genannt, in Sende- und Empfangsrichtung führt. Mit der Ausbildung der streifenförmigen Elektroden wird das sog. mechanische Shading erreicht, ohne dass einzelne Wandlerelemente fertigungstechnisch aufwendig gruppiert werden müssen. Erforderlich ist ausschließlich eine einfache konstruktive Ausbildung der Elektroden auf einer beidseitig mit Elektrodenvollflächen belegten Platte aus Composite- oder Verbundwerkstoff, was durch Ätzen in einem nasschemischen Prozess realisiert werden kann. Dabei werden die streifenförmigen Elektroden voneinander und von der übrigen Elektrodenvollfläche auf dem Composite-Körper getrennt. Die von der Wandleranordnung nicht genutzten Bereiche der Elektrodenvollflächen auf dem Composite-Körper können - müssen aber nicht - entfernt werden. Die erfindungsgemäße Unterwasserantenne lässt sich mit sehr kleinen Abmessungen herstellen, so dass sie problemlos auch von baukleinen, autonom agierenden oder ferngelenkten Unterwasserfahrzeugen getragen werden kann.

Zur Kosteneinsparung trägt insbesondere auch die durch das eingesetzte "mechanische shading" sich ergebende Reduktion der benötigten Sende-Leistungsverstärker zum Ansteuern der Wandler bei, die teuere Baukomponenten darstellen. Während beim "elektronischen shading" für jeden elektroakustischen Wandler ein Leistungsverstärker vorgehalten werden muss, werden bei der erfindungsgemäßen Antenne durch Gruppenbildung der Wandler nur noch so viele Leistungsverstärker benötigt, wie innerhalb einer Gruppe Wandler vorhanden sind, die zur Einstellung einer gewünschten Hauptrichtung (beam) der Richtcharakteristik (pattern) der Antenne mit unterschiedlicher Phasenverschiebung angesteuert werden müssen. Werden alle Wandler phasengleich angesteuert, und damit die Hauptrichtung der Richtcharakteristik rechtwinklig zur Antennenebene eingestellt, so ist bei weitgehender Nebenzipfelfreiheit nur noch ein einziger Leistungsverstärker erforderlich.

Zweckmäßige Ausführungsformen der erfindungsgemäßen Unterwasserantenne mit vorteilhaften Weiterbildungen und Ausgestaltungen der Erfindung ergeben sich aus den weiteren Ansprüchen.

Durch die Wahl der Anzahl der auf einer Composite-Platte realisierten Wandleranordnungen und deren Verteilung auf der Composite-Platte lassen sich unterschiedliche Antennenkonfigurationen realisieren.

Werden gemäß einer vorteilhaften Ausführungsform der Erfindung vier Wandleranordnungen auf der Composite-Platte so ausgebildet, dass ihre quer zu der Breite der stufenförmigen Elektroden erstreckenden Längsachsen radial ausgerichtet und um 90° zueinander versetzt sind, so lässt sich eine Unterwasserantenne konfigurieren, die Sende- und Empfangsrichtungen aufweist, von denen bei entsprechender Anordnung der Unterwasserantenne an einem Träger, z.B. einem Schiff, eine in Vorausrichtung, eine nach Achtern und jeweils eine nach Back- und Steuerbord weist. Damit lässt sich beispielsweise mit geringen Fertigungs- und Installationskosten eine Unterwasserantenne für ein nach dem Janus-Prinzip arbeitendes Dopplerlog realisieren.

Werden gemäß einer vorteilhaften Ausführungsform der Erfindung zwei Wandleranordnungen auf der Platte ausgebildet, deren streifenförmige Elektroden so ausgerichtet sind, dass die Streifenlängen parallel zueinander verlaufen, und wird die Platte am Boden eines Unterwasserfahrzeugs so befestigt, dass die Streifenlängen parallel zur Fahrzeuglängsachse ausgerichtet sind, so lässt sich in technisch einfacher Weise ein Seitensichtsonar (side looking sonar) realisieren, das auf Backbord- und Steuerbordseite jeweils eine zum Meeresboden hin geneigte Hauptrichtung zum Senden und Empfangen aufweist.

Wird gemäß einer alternativen Ausführungsform der Erfindung eine Mehrzahl, z.B. vier, von Wandleranordnungen in der Composite-Platte so realisiert, dass die in Streifenbreite der streifenförmigen Elektrode sich erstreckenden Längsachsen der Wandleranordnungen parallel zueinander ausgerichtet sind, und wird die Composite-Platte so an der Unterseite eines Unterwasserfahrzeugs angeordnet, dass die Längsachsen der Wandleranordnungen in etwa parallel zur Fahrzeuglängsachse ausgerichtet sind, so kann zusätzlich der von Antenne mit Schall "beleuchtete" Streifen auf dem Meeresboden durch Zusammenfassen der Empfangssignale der Wandleranordnungen quer zur Vorausrichtung recht schmal gemacht werden. Die Hauptrichtung der Richtcharakteristik ist gegenüber der Plattenebene elektronisch um einen Neigungswinkel in Vorausrichtung des Unterwasserfahrzeugs geneigt und um die Hochachse des Unterwasserfahrzeugs elektrisch schwenkbar. Die Erfindung ist anhand von in der Zeichnung dargestellten Ausführungsbeispielen im folgenden näher beschrieben. Es zeigen:

Fig. 1     eine Seitenansicht eines eine Unterwasserantenne tragenden, autonomen Unterwasserfahrzeugs, schematisch dargestellt,

Fig. 2     eine Draufsicht der Unterwasserantenne in Richtung Pfeil II in Fig. 1,

Fig. 3     eine Seitenansicht der Unterwasserantenne in Richtung Pfeil III in Fig. 2,

Fig. 4     einen Schnitt längs der Linie IV - IV in Fig. 2,

Fig. 5     einen Schnitt längs der Linie V - V in Fig. 2,

Fig. 6     eine gleiche Darstellung wie in Fig. 2 einer Unterwasserantenne gemäß einem weiteren Ausführungsbeispiel,

Fig. 7     eine gleiche Darstellung wie in Fig. 2 einer für ein Seitensichtsonar konzipierten Unterwasserantenne,

Fig. 8     ausschnittweise eine schematische Darstellung einer festen Verdrahtung der Wandler der Unterwasserantenne in Fig. 7 mit Leistungsverstärkern, Phasendrehgliedern und Sendegenerator,

Fig. 9     eine gleiche Darstellung wie in Fig. 2 einer um die Hochachse des Unterwasserfahrzeugs elektronisch schwenkbare Unterwasserantenne.

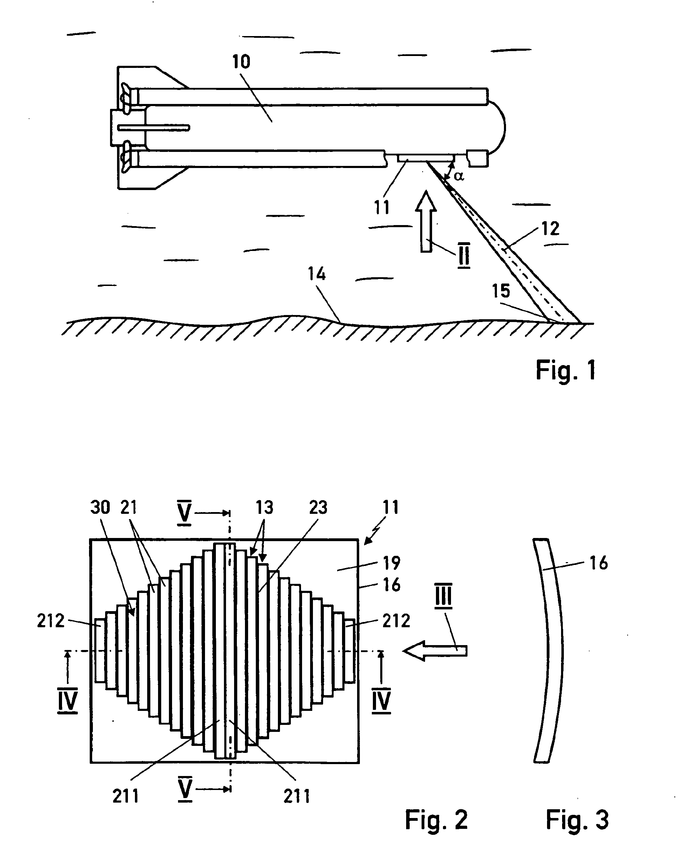

Das in Fig. 1 in Seitenansicht schematisch dargestellte, autonom agierende Unterwasserfahrzeug 10 trägt eine Unterwasserantenne 11 mit einer Sende- und Empfangscharakteristik, auch Richtcharakteristik genannt, deren Hauptrichtung 12 unter einem Neigungswinkel zur Antennenebene zum Meeresboden 14 hin gerichtet ist, so dass auf dem Meeresboden 14 ein Streifen 15 mit Schall "beleuchtet" wird, der in Vorausrichtung des Unterwasserfahrzeugs 10 sehr schmal und quer dazu breiter ist. In Verbindung mit einer entsprechenden Signalverarbeitung kann mit einer solchen Unterwasserantenne 11 z.B. der Meeresboden 14 abgetastet und dessen Topographie vermessen werden oder auf dem Meeresboden 14 liegende Objekte detektiert, geortet und ggf. klassifiziert werden.

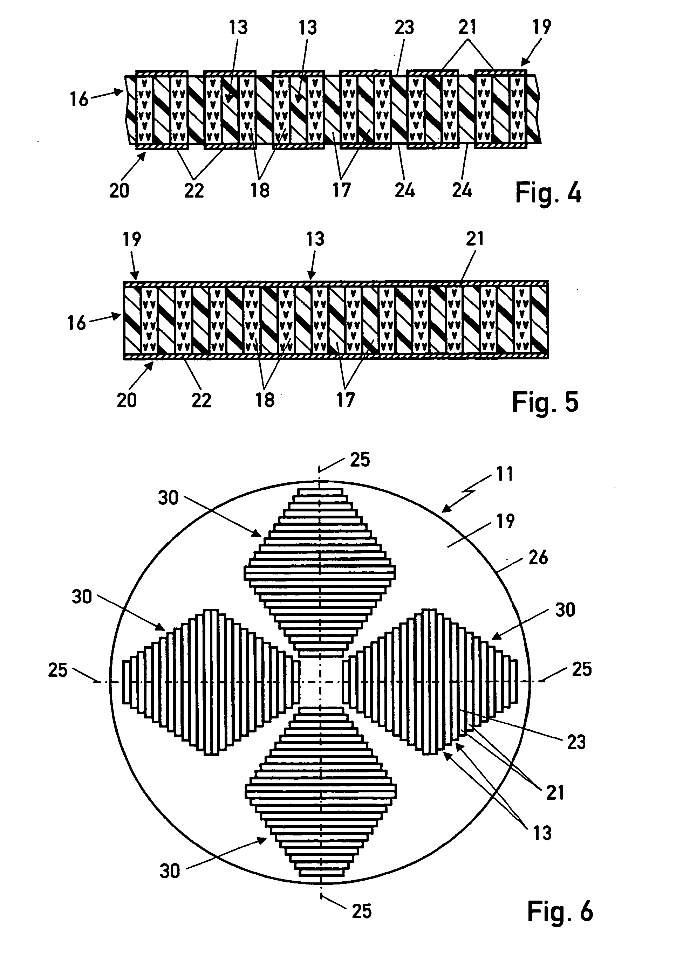

Die an der Unterseite des Unterwasserfahrzeugs 10 angeordnete Unterwasserantenne 11 ist in Fig. 2 in Draufsicht schematisiert dargestellt. Die Unterwasserantenne 11 umfasst eine elektroakustische Wandleranordnung 30, die einen flachen Composite-Körper 16 aus Composite- oder Verbundwerkstoff, mit in einem Polymer eingebetteten Keramikelementen aus piezoelektrischer oder elektrostriktiver Keramik aufweist. Zur Ausbildung der einzelnen elektroakustischen Wandler 13 der Wandleranordnung 30 sind mehrere Keramikelemente auf jeder Stirnseite von jeweils einer gemeinsamen Elektrode überdeckt. In den Schnittdarstellungen der Fig. 4 und 5 ist jeweils der Aufbau des Composite-Körpers 16 zu erkennen. Die säulenartigen Keramikelemente 18 sind rechtwinklig zu den Außenflächen des Composite-Körpers 16 polarisiert, beispielsweise matrixartig in Spalten und Reihen angeordnet und durch das Polymer 17 gegeneinander isoliert. Auf die obere Außenfläche des Composite-Körpers 16 ist eine obere Elektrodenvollfläche 19 und auf die untere Außenfläche des Composite-Körpers 16 eine untere Elektrodenvollfläche 20 aufgebracht. Jede Elektrodenvollfläche 19 bzw. 20 kontaktiert alle Stirnenden der Keramikelemente 18. Zur Ausbildung der elektroakustischen Wandler 13 der Wandleranordnung 30 werden die Elektrodenvollflächen 19, 20, z.B. durch Ätzen in einem nasschemischen Prozess, so aufgetrennt, dass jeweils mehrere Keramikelemente 18 auf jeder Stirnseite von einer gemeinsamen oberen Elektrode 21 und einer gemeinsamen unteren Elektrode 22 überdeckt sind. Dabei werden, wie in der Draufsicht in Fig. 2 und in der Schnittdarstellung in Fig. 4 zu sehen ist, die Elektroden 21, 22 auf den Stirnseiten der Keramikelemente 18 streifenförmig mit großer Streifenlänge und kleinerer Streifenbreite ausgeführt, wobei die Elektroden 21 bzw. 22 in Richtung der Streifenbreite gesehen mit Spaltabstand aneinandergereiht sind. In Fig. 4 sind die geradlinig verlaufenden Spalte zwischen den Elektroden 21 auf der oberen Außenfläche des Composite-Körpers 16 mit 23 und die geradlinig verlaufenden Spalte zwischen den Elektroden 22 auf der unteren Außenfläche des Composite-Körpers 16 mit 24 gekennzeichnet. Alternativ ist es möglich, die streifenförmigen Elektroden 21 oder 22 nur in einer der beiden Elektrodenvollflächen 19 oder 20 durch Einätzen der Spalte 23 bzw. 24 auszuarbeiten. Die Streifenbreite der streifenförmigen Elektroden 21, 22 wird gleich gewählt, während die Streifenlänge der Elektroden 21, 22 von den beiden mittleren Elektroden 211 zu jeweils den äußeren Elektroden 212 hin abnimmt. Dabei erfolgt die Abnahme der Streifenlänge spiegelsymmetrisch zur Streifenmitte, d.h. der in Streifenbreite verlaufenden Längsachse 25 der Wandleranordnung 30 bzw. des Composite-Körpers 16. Durch diese Reduzierung der Streifenlänge der Elektroden 21, 22 besitzen die in Längsachse 25 des Composite-Körpers 16 aneinandergereihten Wandler 13 unterschiedlich viele Keramikelemente 18, so dass die akustische Leistungsabgabe der Unterwasserantenne 11 von der Antennenmitte zum Antennenrand hin abfällt. Durch dieses auf mechanischem Wege erreichte sog. Shading werden unvermeidliche Nebenpegel oder Nebenkeulen oder Nebenzipfel der Sende- und Empfangscharakteristik der Unterwasserantenne 11 in Hauptrichtung 12 weitgehend unterdrückt. Um auch quer zur Hauptrichtung 12 der Unterwasserantenne 11 auftretende Nebenpegel zu reduzieren, wird der Composite-Körper 16 in Richtung der Streifenlänge konkav gekrümmt, wie dies in der in Fig. 3 dargestellten Seitenansicht des Composite-Körpers 16 zu sehen ist.

Bei dem in Fig. 6 in Draufsicht dargestellten Ausführungsbeispiel der Unterwasserantenne 11 ist der vorstehend beschriebene Composite-Körper 16 der Wandleranordnung 30 mit den Wandlern 13 in einem Sektor einer Platte 26 aus Composite- oder Verbundmaterial ausgebildet, die die gleiche Struktur wie der Composite-Körper 16 aufweist. Die Composite-Platte 26 hat den gleichen Aufbau wie er in Fig. 4 und 5 dargestellt ist und ist auf ihren Außenflächen ebenfalls mit den Elektrodenvollflächen 19, 20 belegt, die die Stirnseiten der Keramikelemente 18 kontaktieren. Im Ausführungsbeispiel der Fig. 6 besitzt die Composite-Platte 26 vier solche Sektoren mit Wandleranordnungen 30, wie eine in Fig. 2 dargestellt und vorstehend beschrieben ist. Die vier Wandleranordnungen 30, genauer gesagt die in Radialrichtung der kreisrunden Platten 26 sich erstreckenden Längsachsen 25 der Wandleranordnungen 30, sind um einen Umfangswinkel von 90° gegeneinander versetzt, so dass die streifenförmigen Elektroden 21 von jeweils zwei einander diametral gegenüberliegenden Wandleranordnungen parallel zueinander verlaufen. Die streifenförmigen Elektroden 21 sind wiederum aus den Elektrodenvollflächen 19, 20 der Composite-Platte 26 ausgeschnitten, wobei die verbleibenden, von den streifenförmigen Elektroden 21, 22 abgetrennten Bereich der Elektrodenvollfläche 19 auf der Composite-Platte 26 verbleiben können, da sie elektrisch nicht belegt werden. Zur Reduzierung der quer zur Hauptrichtung 12 der Unterwasserantenne 11 auftretenden Nebenpegel oder -zipfel wird wiederum eine Krümmung der kreisförmigen Composite-Platte 26 vorgenommen, wobei die Composite-Platte 26 eine hohlspiegelartige Form annimmt.

Die in Fig. 6 skizzierte Unterwasserantenne 11 wird vorzugsweise so am Unterwasserfahrzeug 10 befestigt, dass von den Längsachsen 25 der insgesamt vier Wandleranordnungen 30 zwei miteinander fluchtende Längsachsen 25 parallel zur Längsachse des Unterwasserfahrzeugs 10 und zwei miteinander fluchtende Längsachsen 25 rechtwinklig dazu ausgerichtet sind. Dadurch besitzt die Unterwasserantenne 11 insgesamt vier Hauptrichtungen 12, von denen eine nach Voraus, eine nach Achtern, eine nach Steuerbord und eine nach Backbord weist. Mit einer solchen Antennenkonfiguration kann beispielsweise ein Dopplerlog nach dem "Janus-Prinzip" realisiert werden.

Selbstverständlich ist es möglich, auf der Composite-Platte 26 eine andere Zahl von Wandleranordnungen 30 in entsprechenden Sektoren der Composite-Platte 26 auszubilden. Der Umfangswinkel, um die dann die Wandleranordnungen 30 zueinander versetzt sind, ist von der Zahl der vorhandenen Wandleranordnungen 30 abhängig. Selbstverständlich ist es auch möglich, die Composite-Platte 26 quadratisch oder rechteckförmig oder mit einer sonstigen Form zu gestalten. Die Unterwasserantenne kann an beliebigen, schwimmenden und/oder tauchenden Trägern angeordnet werden, z.B. auch an Überwasserschiffen oder an U-Booten.

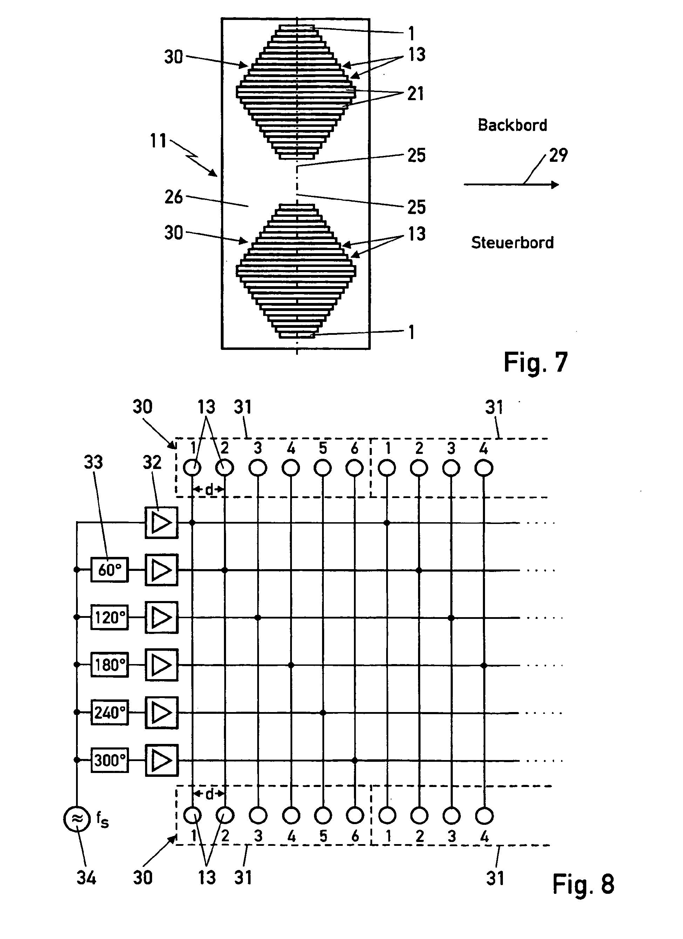

Die in Fig. 7 in Draufsicht dargestellte Unterwasserantenne ist für ein Seitensichtsonar konzipiert und ist an der Unterseite des Unterwasserfahrzeugs 10 (Fig. 1) angeordnet, wobei in Fig. 7 die Fahrzeuglängsachse des Unterwasserfahrzeugs 10 durch den Pfeil 29 symbolisiert ist. Die Composite-Platte 26 hat den gleichen Aufbau wie zu Fig. 6 beschrieben, wobei sie jedoch rechteckförmig ausgebildet ist und nur zwei Wandleranordnungen 30 aufweist, die jeweils in einem Sektor der Platte 26 ausgebildet sind. Die Wandleranordnungen 30 sind auf der Platte 26 so angeordnet, dass ihre Längsachsen 25 miteinander fluchten und somit die Elektroden 21 mit ihren parallelen Streifenlängen in beiden Wandleranordnungen 30 parallel zueinander ausgerichtet sind. Die Platte 26 ist so am Boden bzw. an der Unterseite des Unterwasserfahrzeugs 10 befestigt, dass die miteinander fluchtenden Längsachsen 25 der Wandleranordnungen 30 quer, vorzugsweise rechtwinklig zur Fahrzeuglängsachse 29 des Unterwasserfahrzeugs 10 ausgerichtet sind. Jede Wandleranordnung 30 "beleuchtet" bei entsprechender phasenversetzter Ansteuerung der Wandler 13 backbords bzw. steuerbords einen Streifen 15 auf dem Meeresboden 14 mit Schall, wie er in Fig. 1 Vorausrichtung des Unterwasserfahrzeugs 10 dargestellt ist. Aufgrund des vorstehend ausführlich beschriebenen mechanischen "shading" der Wandleranordnungen 30 weist die Richtcharakteristik der Unterwasserantenne 11 keine bzw. sehr stark reduzierte, insbesondere zum Meeresboden 14 gerichtete Nebenzipfel auf.

Der Neigungswinkel $\alpha$ der Hauptrichtung 12 der Richtcharakteristik der beiden Wandleranordnungen 30 nach Steuer- bzw. Backbord wird durch phasenverschobenes Ansteuern der Wandler 13 eingestellt, wie dies in Fig. 8 schaltungstechnisch illustriert ist. Dabei ist beispielhaft angenommen, dass in jedem der beiden Wandleranordnungen 30 jeweils sechs Wandler Nr. 1 bis 6 in parallelbetriebenen Gruppen 31 zusammengefasst sind und über Leistungsverstärker 32 mit Sendefrequenz $f_s$ phasenverschoben angesteuert werden. Mit dem in Fig. 7 dargestellten Ausführungsbeispiel der Wandleranordnungen 30 mit insgesamt vierundzwanzig Wandlern 13 ergeben sich dann vier parallelbetriebene Gruppen 31 mit jeweils sechs Wandlern 13. Der Neigungswinkel $\alpha$ der Hauptrichtung 12 der Richtcharakteristik jeder Wandleranordnung 30 nach Steuer- bzw. Backbord ergibt sich in bekannter Weise gemäß

$$\cos\alpha \;=\; \frac{\varphi \cdot \lambda}{2\pi \cdot d} \qquad \text{mit} \quad \lambda \;=\; \frac{c}{f_s}\,,$$

wobei $\varphi$ die Phasenverschiebung gegenüber der Bezugsphase 0°, c die Schallgeschwindigkeit im Wasser und d der geometrische Abstand der Wandler 13 voneinander ist. Bei sechs Wandlern 13 pro Gruppe 31 ergibt sich eine Phasenverschiebung zwischen den an aufeinanderfolgenden Wandlern 13 anzulegenden Speiseströmen mit der Sendefrequenz $f_s$ von jeweils 60°. Entsprechend dem festen geometrischen Abstand d der Wandler 13 voneinander liegt der Neigungswinkel $\alpha$ unveränderlich fest. Eine Veränderung des Neigungswinkels $\alpha$ lässt sich nur durch Verändern der Zahl der Wandler 13 innerhalb der Gruppen 31 bewirken, was allerdings eine neu Konfiguration der Verdrahtung der Wandler 13 und eine veränderte Phasenansteuerung erfordert.

Die Wandler 13 sind über die Leistungsverstärker 32 phasenrichtig angesteuert. Hierzu sind zwischen einem Sendegenerator 34 mit der Sendefrequenz $f_s$ und den Leistungsverstärker 32 Phasendrehglieder 33 angeordnet, die die Phasenlage der den Leistungsverstärkern 32 zugeführten Speiseströme richtig einstellen. Vorteilhaft werden zur Ansteuerung der beiden Wandleranordnungen 30 die gleichen Leistungsverstärker 32 verwendet, so dass für beide Wandleranordnungen 30 nur ein einziger Satz von Leistungsverstärkern 32 erforderlich ist, dessen Anzahl an Leistungsverstärkern 32 von der Zahl der in einer Wandleranordnung 30 vorhandenen, parallelbetriebenen Gruppen 31 von Wandlern 13 abhängig ist. Dadurch kann die Zahl der Leistungsverstärker 32 niedrig gehalten und erhebliche Kosten eingespart werden, da Leistungsverstärker recht teuere Bauteile darstellen. Um beide Wandleranordnungen 30 mit demselben Satz von Leistungsverstärkern 32 ansteuern zu können, sind die Ausgänge der Leistungsverstärker 32 sowohl mit den Wandlern 13 der einen Wandleranordnung 30 als auch mit den Wandlern 13 der anderen Wandleranordnung 30 verbunden. Da die Hauptrichtung der Richtcharakteristik der einen Wandleranordnung 30 einen Neigungswinkel $\alpha$ zu Plattenebene der Composite-Platte 26 und die Hauptrichtung 12 der Richtcharakteristik der anderen Wandleranordnung 30 einen Neigungswinkel von 180°-$\alpha$ aufweisen soll, müssen die Wandler 13 für die Steuerbordseite mit einer anderen Phasenverschiebung angesteuert werden, als die Wandler 13 für die Backbordseite, was sich durch eine geeignete Verdrahtung der Wandler 13 der beiden Wandleranordnungen 30 realisieren lässt, wie dies in Fig. 8 dargestellt ist. Wird die Reihenfolge der Wandler 13 in jeder Wandleranordnung 30 jeweils beginnend an der schmalen Außenseite der Composite-Platte 26 so festgelegt, dass aufeinanderfolgende Wandler 13 mit steigender Nummer (Nr. 1, Nr. 2, .... Nr. 6; Nr. 1, Nr. 2, ... Nr. 6; Nr. 1 ...) belegt sind, so sind alle Wandler 13 mit gleicher Nummerierung an demselben Leistungsverstärker 32 anzuschließen. In Fig. 7 sind beispielhaft die beiden äußeren Wandler 13 mit Nr. 1 gekennzeichnet. Die Nummerierung der weiteren Wandler 13 ergibt sich aus Fig. 8. Die Phasen, mit denen die einzelnen Leistungsverstärker 32 angesteuert werden, sind in Fig. 8 in den den Leistungsverstärker 32 vorgeordneten Phasendrehglieder 33 eingetragen.

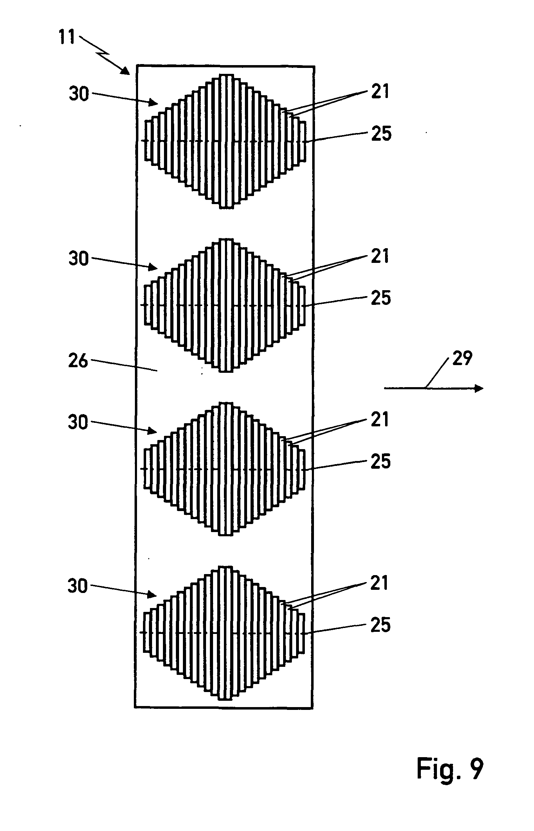

Die in Fig. 9 in Unteransicht zu sehende Unterwasserantenne 11 besitzt mehrere Wandleranordnungen 30 deren Längsachsen 25 parallel zueinander und zur Fahrzeuglängsachse 29 ausgerichtet sind. Die vier Wandleranordnungen 30 sind wiederum in Sektoren einer Platte 26 aus Composite- oder Verbundmaterial realisiert, die die gleiche Struktur wie der Compositekörper 16 in Fig. 2 aufweist. Sind in jeder Wandleranordnung 30 die einzelnen Wandler 13 phasenverschoben so angesteuert, wie das für eine Wandleranordnung 30 in Fig. 8 dargestellt ist, so ist die Hauptrichtung 12 der Richtcharakteristik der Unterwasserantenne 11 unter einem Neigungswinkel $\alpha$ gegen die von der Fahrzeuglängs-

und- querachse aufgespannte Ebene geneigt, wie dies in Fig. 1 dargestellt ist. Der von der Antenne 11 mit Schall "beleuchtete" Streifen 15 auf dem Meeresboden 14 ist sowohl in Vorausrichtung des Unterwasserfahrzeugs 10 als auch quer dazu recht schmal. Werden nunmehr alle Wandler 13 einer Wandleranordnung 30 unter Beibehaltung der Phasenansteuerung der einzelnen Wandler 13 in den Gruppen 31, wie dies zu Fig. 8 illustriert ist, zusätzlich mit einer konstanten Phasenverschiebung angesteuert und die konstante Phasenverschiebung von der einen Wandleranordnungen 30 zur nächstfolgenden Wandleranordnung 30 passend verändert, so kann die Hauptrichtung 12 der Unterwasserantenne 11 um die Hochachse des Unterwasserfahrzeugs 10, also quer zur Längsachse 29 des Unterwasserfahrzeugs 10 in Fig. 9, geschwenkt werden, wobei der Schwenkwinkel durch die Phasenverschiebungen von Wandleranordnungen 30 zu Wandleranordnung 30 bestimmt wird. Der zusätzliche Phasenversatz wird dadurch erreicht, dass allen Phasendrehgliedern 33 für die Wandler 13 in den Gruppen 31 einer Wandleranordnung 30, wie diese in Fig. 8 illustriert sind, ein gemeinsames Phasendrehglied vorgeschaltet wird, das die entsprechende Phasenverschiebung des vom Sendegenerator 34 kommende Speisestroms vorab durchführt. Mit dieser besonderen Antennenkonfiguration kann ein hochauflösendes, quer zur Fahrtrichtung des Unterwasserfahrzeugs 10 scannendes Detektionssonar (forward looking sonar) mit relativ geringem Fertigungsaufwand realisiert werden. Durch das mit der Geometrie der Wandleranordnungen 30 erzielte "mechanische shading" sind insbesondere die störenden Nebenzipfel senkrecht zur Schwenkebene der Richtcharakteristik der Unterwasserantenne 11 weitgehend unterdrückt.

## Patentansprüche

1. Unterwasserantenne mit mindestens einer aus einer Mehrzahl von elektroakustischen Wandlern (13) bestehenden Wandleranordnung (30), die einen Composite-Körper (16) aus Composite-Material aufweist, das aus in einem Polymer (17) eingebetteten, piezoelektrischen oder elektrostriktiven Keramikelementen (18) besteht, wobei zur Ausbildung eines Wandlers (13) mehrere Keramikelemente (18) auf jeder Stirnseite von jeweils einer gemeinsamen Elektrode (21, 22) überdeckt sind, und dass zur Realisierung mehrerer Wandleranordnungen (30) deren Composite-Körper (16) räumlich begrenzte Sektoren in einer Platte (26) aus gleichem Composite-Material mit auf ihren Platten-Außenflächen angeordneten, die Keramikelemente (18) kontaktierenden Elektrodenvollflächen (19, 20) sind und die die Sektoren überdeckenden Bereiche mindestens einer der Elektrodenvollflächen (19, 20) in streifenförmige Elektroden (21, 22) mit gegenüber der Streifenlänge deutlich kleinerer Streifenbreite unterteilt sind, die in Richtung der Streifenbreite gesehen mit Spaltabstand nebeneinanderliegen, und dass die Streifenlängen der Elektroden (21, 22) so bemessen sind, dass sie von der mittleren Elektrode (211) zu den beiden äußeren Elektroden (212) hin abnehmen.

2. Unterwasserantenne nach Anspruch 1, **dadurch gekennzeichnet, dass** die Streifenbreite der Elektroden (21, 22) gleich ist.

3. Unterwasserantenne nach Anspruch 1 oder 2, **dadurch gekennzeichnet, dass** die Abnahme der Streifenlänge symmetrisch zur Streifenmitte erfolgt.

4. Unterwasserantenne nach einem der Ansprüche 1 bis 3, **dadurch gekennzeichnet, dass** die Sektoren mit den in streifenförmige Elektroden (22) unterteilten Bereichen der mindestens einen Elektrodenvollfläche (19, 20) um einen gleichen, durch die Zahl der Wandleranordnungen (30) bestimmten Umfangswinkel gegeneinander versetzt sind.

5. Unterwasserantenne nach Anspruch 4, **dadurch gekennzeichnet, dass** in der Composite-Platte (26) vier Wandleranordnungen (30) mit einer quer zur Streifenlänge der streifenförmigen Elektroden (21) verlaufende Längsachse (25) ausgebildet und die zueinander radial verlaufenden Längsachsen (25) um 90° Umfangswinkel gegeneinander versetzt sind, so dass die streifenförmigen Elektroden (21) von jeweils zwei einander gegenüberliegenden Wandleranordnungen (30) parallel zueinander verlaufen.

6. Unterwasserantenne nach Anspruch 5, **dadurch gekennzeichnet, dass** die Composite-Platte (26) an einem Wasserfahrzeug (10) so angeordnet ist, dass von den Längsachsen (25) der Wandleranordnungen eine nach Voraus, eine nach Achtern, eine nach Steuerbord und eine nach Backbord weist.

7. Unterwasserantenne nach Anspruch 5 oder 6, **dadurch gekennzeichnet, dass** die Composite-Platte (26) hohlspiegelartig gekrümmt ist.

8. Unterwasserantenne nach Anspruch 4, **dadurch gekennzeichnet, dass** in der Composite-Platte (26) zwei Wandleranordnungen (30) so ausgebildet sind, dass die streifenförmigen Elektroden (21) in beiden Wandleranordnungen (30) parallel zueinander verlaufen, und dass die Composite-Platte (26) an der Unterseite eines Unterwasserfahrzeugs (10) so angeordnet ist, dass die Streifenlängen der streifenförmigen Elektroden (21) in etwa parallel zur Fahrzeuglängsachse (29) ausgerichtet sind.

9. Unterwasserantenne nach Anspruch 8, **dadurch gekennzeichnet, dass** die Wandler (13) in jeder Wandleranordnung (30) auf parallelbetriebene Gruppen (31) mit gleicher Anzahl von Wandlern (13) aufgeteilt sind und dass zur Neigung der Hauptrichtungen (12) der Richtcharakteristiken bei den Wandleranordnungen (30) nach Steuerbord einerseits und Backbord andererseits um einen Neigungswinkel ($\alpha$) gegenüber der Plattenebene der Composite-Platte (26) die in jeder Wandleranordnung (30) vom Außenrand der Composite-Platte (26) nach innen aufeinanderfolgenden Wandler (13) innerhalb der parallelbetriebenen Gruppen (31) in beiden Wandleranordnungen (30) über je einen für beide Wandleranordnungen (30) gemeinsamen Leistungsverstärker (32) phasenverschoben angesteuert sind.

10. Unterwasserantenne nach Anspruch 9, **dadurch gekennzeichnet, dass** die Leistungsverstärker (32) mit den zugeordneten Wandlern (13) in den parallelbetriebenen Gruppen (31) beider Wandleranordnungen (30) fest verdrahtet sind.

11. Unterwasserantenne nach einem der Ansprüche 1 bis 3, **dadurch gekennzeichnet, dass** die mehreren Wandleranordnungen (30) in der Composite-Platte (26) so ausgebildet sind, dass die in Streifenbreite der streifenförmigen Elektroden (21) sich erstreckenden Längsachsen (25) der Wandleranordnungen (30) parallel zueinander ausgerichtet sind und dass die Composite-Platte (26) so an der Unterseite eines Unterwasserfahrzeugs (10) angeordnet ist, dass die Längsachsen (25) der Wandleranordnungen (30) in etwa parallel zur Fahrzeuglängsachse (29) ausgerichtet sind.

12. Unterwasserantenne nach Anspruch 11, **dadurch gekennzeichnet, dass** die Hauptrichtung (12) ihrer Richtcharakteristik gegenüber der Plattenebene der Composite-Platte (26) elektronisch um einen Neigungswinkel ($\alpha$) in Vorausrichtung des Unterwasserfahrzeugs (10) geneigt und um die Hochachse des Unterwasserfahrzeugs elektrisch schwenkbar ist.

## Claims

1. An underwater antenna having at least one transducer arrangement (30) which comprises a plurality of electroacoustic transducers (13) and has a composite body (16) composed of composite material which is composed of piezoelectric or electrostrictive ceramic elements (18) embedded in a polymer (17), with a plurality of ceramic elements (18) being covered on each end face by in each case one common electrode (21, 22) in order to form a transducer (13), and in order to produce a plurality of transducer arrangements (30), sectors which spatially bound their composite bodies (16) in a plate (26) are composed of the same composite material with solid electrode surfaces (19, 20) which are arranged on their plate outer surfaces and make contact with the ceramic elements (18), and those areas of at least one of the solid electrode surfaces (19, 20) which cover the sectors are subdivided into electrodes (21, 22) which are in the form of strips and have a strip width which is considerably less than the strip length, which strips are located alongside one another, separated by a gap seen in the direction of the strip width, and in that the strip lengths of the electrodes (21, 22) are designed such that they decrease from the central electrode (211) towards the two outer electrodes (212).

2. The underwater antenna as claimed in claim 1, **characterized in that** the strip width of the electrodes (21, 22) is the same.

3. The underwater antenna as claimed in claim 1 or 2, **characterized in that** the decrease in the strip length is symmetrical with respect to the strip center.

4. The underwater antenna as claimed in one of claims 1 to 3, **characterized in that** the sectors with the areas of the at least one solid electrode surface (19, 20) which are subdivided into electrodes (22) in the form of strips are offset with respect to one another through the same circumferential angle, which is governed by the number of transducer arrangements (30).

5. The underwater antenna as claimed in claim 4, **characterized in that** four transducer arrangements (30) are formed in the composite plate (26) with a longitudinal axis (25) running transversely with respect to the strip length of the electrodes (21) which are in the form of strips, and the longitudinal axes (25) which run radially with respect to one another are offset through a circumferential angle of 90° with respect to one another, so that the electrodes (21) which are in the form of strips of in each case two mutually opposite transducer arrangements (30) run parallel to one another.

6.   The underwater antenna as claimed in claim 5, **characterized in that** the composite plate (26) is arranged on a water craft (10) such that one of the longitudinal axes (25) of the transducer arrangements points ahead, one astern, one to starboard and to port.

7.   The underwater antenna as claimed in claim 5 or 6, **characterized in that** the composite plate (26) is curved like a hollow mirror.

8.   The underwater antenna as claimed in claim 4, **characterized in that** two transducer arrangements (30) are formed in the composite plate (26) such that the electrodes (21) which are in the form of strips in the two transducer arrangements (30) run parallel to one another, and **in that** the composite plate (26) is arranged on the lower face of an underwater vehicle (10) such that the strip lengths of the electrodes (21) which are in the form of strips are aligned approximately parallel to the vehicle longitudinal axis (29).

9.   The underwater antenna as claimed in claim 8, **characterized in that** the transducers (13) in each transducer arrangement (30) are split into groups (31) which are operated in parallel and have the same number of transducers (13), and **in that**, in order to incline the main lobes (12) of the directional characteristics of the transducer arrangements (30) to starboard on the one hand and to port on the other hand through an inclination angle ($\alpha$) with respect to the plate plane of the composite plate (26), those transducers (13) which follow one another inwards in each transducer arrangement (30) from the outer edge of the composite plate (26) within the parallel-operated groups (31) in the two transducer arrangements (30) are driven with a phase shift via in each case one power amplifier (32), which is shared by the two transducer arrangements (30).

10.  The underwater antenna as claimed in claim 9, **characterized in that** the power amplifiers (32) are hard-wired to the associated transducers (13) in the parallel-operated groups (31) of the two transducer arrangements (30).

11.  The underwater antenna as claimed in one of claims 1 to 3, **characterized in that** the plurality of transducer arrangements (30) are formed in the composite plate (26) such that the longitudinal axes (25) of the transducer arrangements (30) which extend in the strip width of the electrodes (21) which are in the form of strips are aligned parallel to one another, and **in that** the composite plate (26) is arranged on the lower surface of an underwater vehicle (10) such that the longitudinal axes (25) of the transducer arrangements (30) are aligned approximately parallel to the vehicle longitudinal axis (29).

12.  The underwater antenna as claimed in claim 11, **characterized in that** the main lobe (12) of its directional characteristic is electronically inclined with respect to the plate plane of the composite plate (26) through an inclination angle ($\alpha$) in the direction ahead of the underwater vehicle (10), and can be scanned electrically about the vertical axis of the underwater vehicle.

**Revendications**

1.   Antenne sous-marine comprenant au moins un arrangement transducteur (30) composé d'une pluralité de transducteurs électroacoustiques (13), lequel présente un corps composite (16) en matériau composite, constitué d'éléments en céramique (18) piézoélectriques ou électrostrictifs enrobés dans un polymère (17), plusieurs éléments en céramique (18) étant recouverts à chaque fois par une électrode (21, 22) commune de chaque côté frontal en vue de former un transducteur (13), et pour réaliser plusieurs arrangements transducteurs (30), leurs corps composites (16) étant des secteurs délimités dans l'espace dans une plaque (26) dans le même matériau composite avec des surfaces d'électrode pleines (19, 20) disposées sur leurs surfaces extérieures de plaque et en contact avec les éléments en céramique (18) et les zones qui recouvrent les secteurs d'au moins l'une des surfaces d'électrode pleines (19, 20) sont divisées en électrodes (21, 22) en forme de bandes ayant une largeur de bande nettement plus petite que la longueur de bande, lesquelles sont disposées les unes à côté des autres dans le sens de la largeur des bandes avec un espace d'entrefer, et les longueurs de bande des électrodes (21, 22) étant dimensionnées de telle sorte qu'elles diminuent à partir de l'électrode centrale (211) jusqu'aux deux électrodes extérieures (212).

**2.** Antenne sous-marine selon la revendication 1, **caractérisée en ce que** la largeur de bande des électrodes (21, 22) est identique.

**3.** Antenne sous-marine selon la revendication 1 ou 2, **caractérisée en ce que** la diminution de la longueur des bandes s'effectue de manière symétrique par rapport au centre de la bande.

**4.** Antenne sous-marine selon l'une des revendications 1 à 3, **caractérisée en ce que** les secteurs avec les zones divisées en électrodes (22) en forme de bandes de l'au moins une surface d'électrode pleine (19, 20) sont décalés les uns par rapport aux autres d'un angle inscrit identique, déterminé par le nombre d'arrangements transducteurs (30).

**5.** Antenne sous-marine selon la revendication 4, **caractérisée en ce que** dans la plaque en composite (26) sont formés quatre arrangements transducteurs (30) avec un axe longitudinal (25) qui s'étend transversalement par rapport à la longueur de bande des électrodes (21) en forme de bandes et les axes longitudinaux (25) qui s'étendent dans le sens radial les uns par rapport aux autres sont décalés mutuellement d'un angle inscrit de 90°, de sorte que les électrodes (21) en forme de bandes de deux arrangements transducteurs (30) mutuellement opposés s'étendent parallèlement l'une à l'autre.

**6.** Antenne sous-marine selon la revendication 5, **caractérisée en ce que** la plaque en composite (26) est montée sur un véhicule nautique (10) de telle sorte que parmi les axes longitudinaux (25) des arrangements transducteurs, l'un est dirigé vers l'avant, un vers l'arrière, un vers bâbord et l'autre vers tribord.

**7.** Antenne sous-marine selon la revendication 5 ou 6, **caractérisée en ce que** la plaque en composite (26) est courbée à la manière d'un réflecteur de concentration.

**8.** Antenne sous-marine selon la revendication 4, **caractérisée en ce que** dans la plaque en composite (26), deux arrangements transducteurs (30) sont configurés de telle sorte que les électrodes (21) en forme de bandes s'étendent parallèlement les unes aux autres dans les deux arrangements transducteurs (30) et **en ce que** la plaque en composite (26) est montée sur le dessous d'un véhicule sous-marin (10) de telle sorte que les longueurs de bande des électrodes (21) en forme de bandes sont orientées à peu près parallèlement à l'axe longitudinal du véhicule (29).

**9.** Antenne sous-marine selon la revendication 8, **caractérisée en ce que** les transducteurs (13) dans chaque arrangement transducteur (30) sont répartis en groupes (31) fonctionnant en parallèle avec le même nombre de transducteurs (13) et **en ce que** pour incliner les directions principales (12) des caractéristiques directionnelles sur les arrangements transducteurs (30) d'une part vers le bâbord et d'autre part vers le tribord d'un certain angle d'inclinaison ($\alpha$) par rapport au plan de plaque de la plaque composite (26), les transducteurs (13) au sein des groupes (31) fonctionnant en parallèle dans chaque arrangement transducteur (30), qui se succèdent depuis le bord extérieur de la plaque en composite (26) vers l'intérieur, sont commandés dans les deux arrangements transducteurs (30) avec un décalage de phase à chaque fois par le biais d'un amplificateur de puissance (32) commun pour les deux arrangements transducteurs (30).

**10.** Antenne sous-marine selon la revendication 9, **caractérisée en ce que** les amplificateurs de puissance (32) sont câblés à demeure avec les transducteurs (13) associés dans les groupes (31) fonctionnant en parallèle des deux arrangements transducteurs (30).

**11.** Antenne sous-marine selon l'une des revendications 1 à 3, **caractérisée en ce que** les plusieurs arrangements transducteurs (30) dans la plaque en composite (26) sont configurés de telle sorte que les axes longitudinaux (25) des arrangements transducteurs (30) qui s'étendent dans la largeur de bande des électrodes (21) en forme de bandes sont orientés parallèlement les uns aux autres et **en ce que** la plaque en composite (26) est montée sur le dessous d'un véhicule sous-marin (10) de telle sorte que les axes longitudinaux (25) des arrangements transducteurs (30) sont orientés à peu près parallèlement à l'axe longitudinal du véhicule (29).

**12.** Antenne sous-marine selon la revendication 11, **caractérisée en ce que** la direction principale (12) de sa caractéristique directionnelle est inclinée électroniquement par rapport au plan de plaque de la plaque composite (26) d'un angle d'inclinaison ($\alpha$) en direction de l'avant du véhicule sous-marin (10) et peut pivoter électriquement autour de l'axe vertical du véhicule sous-marin.

**Fig. 1**

**Fig. 2**     **Fig. 3**

10

Fig. 4

Fig. 5

Fig. 6

**Fig. 7**

**Fig. 8**

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5950291 A
- DE 10052636 A1
- US 4460841 A